# EUROPÄISCHE PATENTSCHRIFT

(11) **EP 0 684 743 B1**
(45) Veröffentlichungstag und Bekanntmachung des Hinweises auf die Patenterteilung: **28.07.1999**
(21) Anmeldenummer: 95107494.7
(22) Anmeldetag: 16.05.1995
(51) Int. Cl.: H04Q 7/18, H04B 1/38, H04Q 7/32

(54) **Programmierbares Funkgerät**
Programmable radio transceiver
Radio émetteur-récepteur programmable

(30) Priorität: 25.05.1994 DE 4418233
(43) Veröffentlichungstag der Anmeldung: 29.11.1995
(73) Patentinhaber: SIEMENS AKTIENGESELLSCHAFT, 80333 München (DE)
(72) Erfinder: Hofmann, Ludwig, Dipl. Ing., D-85304 Ilmmünster (DE)

(56) Entgegenhaltungen:
- WO-A-92/17943
- GB-A- 2 249 459
- US-A- 5 086 513

## Beschreibung

Die Erfindung bezieht sich auf ein Funksprechgerät zur Verwendung in einem Funknetz, insbesondere Mobilfunkgerät mit Sende-/Empfangs- und Steuereinrichtungen.

Es ist derzeit üblich, daß zum Einspielen einer neuen Software das Mobiltelefon zum Händler oder Servicezentrum des Geräteherstellers gebracht wird. Dort wird das Gerät an ein Programmiergerät angeschlossen und so eine neue Software in die im Mobiltelefon enthaltenen Flash Proms oder sonstige nichtflüchtige Speicher programmiert.

Aus der britischen Patentanmeldung GB 2 249 459 A ist ein Verfahren bekannt, das der Aktualisierung einer in einer Speichereinrichtung eines Funksprechgerätes gespeicherten ersten Rufnummer dient, und bei dem eine zweite Rufnummer über das Funknetz in die Speichereinrichtung des Funksprechgerätes übertragen und dort gespeichert wird, nachdem zuvor eine Serviceeinrichtung anhand einer Abfrage einer das Funksprechgerät identifizierenden Information aus dem Funksprechgerät über das Funknetz eine zur Aktualisierung des Funksprechgerätes geeignete zweite Rufnummer ausgewählt oder ermittelt hat.

Aus der internationalen Anmeldung WO 92/1 79 43 ist ein Verfahren bekannt, bei dem in der Speichereinrichtung die dort gespeicherte Software eines Funksprechgerätes durch über das Funknetz empfangene Software aktualisiert wird. Häufig ist es jedoch wünschenswert, dass die Aktualisierungssoftware den Eigenarten und dem Typ des Funksprechgerätes angepasst werden kann. Der Erfindung liegt daher die Aufgabe zugrunde, eine technische Lehre anzugeben, die die Aktualisierung der Software eines Funksprechgerätes in individueller Weise ermöglicht.

Diese Aufgabe wird gemäß der Erfindung gelöst durch ein Verfahren zur Aktualisierung der Geräte-Software für den Betrieb innerhalb des Funknetzes gemäß Anspruch 1.

In vorteilhafter Ausgestaltung des Erfindungsgegenstandes ist vorgesehen, daß die Einrichtungen aus einem Computer (z.B. Notebook) mit geeigneter Software und Schnittstelle bestehen, an den das Funksprechgerät anschließbar ist, oder daß es einen Teil des Computers bildet.

Weitere vorteilhafte Ausgestaltungen und Weiterbildungen des Erfindungsgegenstandes sind in den Unteransprüchen 2 bis 5 angegeben, die nachstehend bei der Beschreibung des Erfindungsgegenstandes näher erläutert werden.

Die Aktualisierung der Software kann dabei in der Weise erfolgen, daß der Benutzer des Funksprechgerätes mit Hilfe eines Programmes die aktuelle, d.h. neueste Mobiltelefonsoftware in seinen Speicher eingibt. Hierzu wird das Mobiltelefon als Datenübertragungseinrichtung verwendet.

Insbesondere bei wichtigen Software-Updates kann die Aktualisierung in der Weise vorgenommen werden, daß das Servicezentrum des Mobilgeräteherstellers das Mobiltelefon anruft und den Software-Update veranlaßt. Dies kann auch geschehen, ohne daß jemand das Mobiltelefon bedient. Für diese Anrufe eines Gerätes zur Durchführung der Aktualisierung wird in vorteilhafter Weise die Teilnehmernummer oder die Seriennummer (IMEI) des Gerätes angewählt. Bei der Übertragung wird die Seriennummer des Gerätes abgefragt. Dabei ist auch vorgesehen, daß die Seriennummer verwendet wird zur Registrierung der Hardware- und Software-Stände der auf dem Markt befindlichen Geräte. Der automatische Update kann auf Anforderung oder im Rahmen eines Update-Vertrages bzw. eines Wartungsvertrages erfolgen.

Es ist ferner vorgesehen, daß durch die Erfassung der Seriennummer bestimmten Geräten bestimmte Merkmale (Features) zugeordnet werden. Dabei kann es sich um Sperrungen, Freigaben, Möglichkeiten zur Faxübertragung oder Spiele handeln. Durch die Erfassung der Seriennummer ist auch die Möglichkeit der Übertragung einer hardwareabhängigen Software gegeben.

Weitere Merkmale des erfindungsgemäßen Funksprechgerätes bestehen darin, daß durch die Einrichtungen zur Aktualisierung der Software ein als gestohlen gemeldetes Gerät unbrauchbar gemacht werden kann. Bildet das Mobiltelefon einen Teil einer größeren Einheit, beispielsweise beim Anschluß an einen Bordcomputer, so kann im Fall des Diebstahls blockiert werden oder eine andere Aktion, z.B. eine Ansage, veranlaßt werden.

Das Funksprechgerät bietet ebenso die Möglichkeit, daß durch Zuordnung von Funktionen zur Teilnehmernummer mittels eines Software-Updates dem Teilnehmer neue Funktionen hinsichtlich der Nutzung des Gerätes zur Verfügung gestellt werden.

## Patentansprüche

1. Verfahren zur Aktualisierung einer in einer Speichereinrichtung eines Funksprechgerätes gespeicherten ersten Software, bei dem eine zweite Software über das Funknetz in die Speichereinrichtung eines Funksprechgerätes übertragen und dort gespeichert wird, nachdem zuvor, ohne Zutun des Benutzers des Funksprechgerätes, eine Serviceeinrichtung anhand einer Abfrage einer das Funksprechgerät identifizierenden Information aus dem Funksprechgerät über das Funknetz eine zur Aktualisierung des Funksprechgerätes geeignete zweite Software ausgewählt oder ermittelt hat, dadurch **gekennzeichnet,** daß die Serviceeinrichtung der abgefragten, das Funksprechgerät identifizierenden Information bestimmte Merkmale des Funksprechgerätes zuordnet, und die zweite Software in Abhängigkeit von diesen Merkmalen auswählt oder ermittelt und anschließend an das Funksprechgerät zur Aktualisierung der Software überträgt.

2. Verfahren nach Anspruch 1, bei dem ein Merkmal bedeutet, daß das Funksprechgerät gesperrt werden soll, und bei dem die Sperrung des Funksprechgerätes durch Übertragung einer die Sperrung bewirkenden zweiten Software an das Funksprechgerät durchgeführt wird.

3. Verfahren nach einem der vorhergehenden Ansprüche, dadurch **gekennzeichnet,** daß der Anruf eines Funksprechgerätes zur Durchführung der Aktualisierung über die Teilnehmernummer oder die Seriennummer (IMEI) des Funksprechgerätes erfolgt.

4. Verfahren nach Anspruch 3, dadurch **gekennzeichnet**, daß über die Seriennummer eine Registrierung der Hardware- und Software-Daten erfolgt.

5. Verfahren nach einem der Ansprüche 3 oder 4, dadurch **gekennzeichnet**, daß über die Erfassung der Seriennummer die Übertragung einer hardwareabhängigen Software erfolgt.

## Claims

1. Method for updating first software which is stored in a memory device of a voice radio appliance, in the case of which second software is transmitted via the radio network to the memory device of a voice radio appliance and is stored there (without the user of the voice radio appliance having to do anything) once a service device has already selected or determined second software, which is suitable for updating the voice radio appliance, on the basis of an interrogation of information (which identifies the voice radio appliance) from the voice radio appliance via the radio network, characterized in that the service device assigns specific features of the voice radio appliance to the interrogated information which identifies the voice radio appliance, and selects or determines the second software as a function of these features, and then transmits said second software to the voice radio appliance in order to update the software.

2. Method according to Claim 1, in which one feature means that the voice radio appliance is intended to be inhibited, and in which the inhibiting of the voice radio appliance is carried out by transmitting to the voice radio appliance second software which causes the inhibiting.

3. Method according to one of the preceding claims, characterized in that the call from a voice radio appliance in order to carry out the updating is carried out via the subscribing number or the serial number (IMEI) of the voice radio appliance.

4. Method according to Claim 3, characterized in that the hardware and software data are registered via the serial number.

5. Method according to one of Claims 3 or 4, characterized in that hardware-dependent software is transmitted via the detection of the serial number.

## Revendications

1. Procédé pour actualiser un premier logiciel stocké dans un dispositif de mémoire d'un radiotéléphone, dans lequel un second logiciel est transféré, via le réseau radio, dans le dispositif de mémoire d'un radiotéléphone où il est stocké après qu'un dispositif de service ait préalablement sélectionné ou déterminé un second logiciel adapté pour l'actualisation du radiotéléphone en se basant sur une interrogation du radiotéléphone, via le réseau radio, qui lui fournit une information identifiant le radiotéléphone, et ce sans intervention de l'utilisateur du radiotéléphone, caractérisé en ce que le dispositif de service associe à l'information demandée, identifiant le radiotéléphone, des caractéristiques déterminées du radiotéléphone et sélectionne ou détermine le second logiciel en fonction de ces caractéristiques et le transmet ensuite au radiotéléphone afin d'actualiser le logiciel.

2. Procédé selon la revendication 1, dans lequel une caractéristique signifie que le radiotéléphone doit être bloqué, et dans lequel le blocage du radiotéléphone est exécuté par la transmission au radiotéléphone d'un second logiciel provoquant le blocage.

3. Procédé selon l'une des revendications précédentes, caractérisé en ce que l'appel d'un radiotéléphone en vue de procéder à l'actualisation se fait par le biais du numéro d'abonné ou du numéro de série (IMEI) du radiotéléphone.

4. Procédé selon la revendication 3, caractérisé en ce qu'un enregistrement des données du matériel et du logiciel se fait par le biais du numéro de série.

5. Procédé selon l'une des revendications 3 ou 4, caractérisé en ce que la transmission d'un logiciel dépendant du matériel se fait par le biais de la saisie du numéro de série.
